# EUROPEAN PATENT APPLICATION

(11) **EP 3 190 451 A1**
(43) Date of publication of application: **12.07.2017**
(21) Application number: 15832863.3
(22) Date of filing: 03.07.2015
(51) Int. Cl.: G02F 1/133, H04M 1/02

(54) **MOBILE DEVICE PROTECTION APPARATUS**

(30) Priority: 02.09.2014 CN 201410443494
(71) Applicant: BOE Technology Group Co., Ltd., Beijing 100015 (CN); Beijing BOE Optoelectronics Technology Co., Ltd., Beijing 100176 (CN)
(72) Inventor: YANG, Jiuxia, Beijing 100176 (CN); BAI, Feng, Beijing 100176 (CN); WANG, Ruiyong, Beijing 100176 (CN)
(74) Representative: Brötz, Helmut
(86) International application number: PCT/CN2015/083239
(87) International publication number: WO 2016/034016

(57) **Abstract**

A protective device of mobile equipment is provided. The protective device of mobile equipment comprises: a bottom plate (1) and a protective cover plate (2) connected with and opposite to the bottom plate (1). The protective cover plate (2) is provided with a light collecting layer (3) and a photovoltaic layer (4). The light collecting layer (3) is configured to refract the incident light and guide it into the photovoltaic layer (4). The photovoltaic layer (4) is configured to convert energy of the incident light guided by the light collecting layer into electric energy. The light collecting layer (3) is used to guide the incident light to the photovoltaic layer (4), so that the utilization rate of the incident light is improved, and the capability of the protective device of mobile equipment with solar charging function supplying power to the mobile equipment and continuously charging the mobile equipment is enhanced.

## Description

### TECHNICAL FIELD

Embodiments of the present disclosure relate to a protective device of mobile equipment.

### BACKGROUND

A mobile equipment comprises a communication product, a mobile navigation product, a portable video and audio playing product and the like. The mobile equipment is very popular since it has advantages of portable, rich functions, strong entertainment and the like. The mobile equipment is usually carried on and has display function. The mobile equipment is usually provided with a protective case in order to protect a housing and/or a display screen of the mobile equipment.

### SUMMARY

According to at least one of embodiments of the present disclosure, a protective device of mobile equipment is provided. The protective device of mobile equipment comprises a bottom plate and a protective cover plate, the protective cover plate being connected with and opposite to the bottom plate, and the protective cover plate being provided with a light collecting layer and a photovoltaic layer.

The light collecting layer is configured to deflect the incident light and guide the incident light into the photovoltaic layer.

The photovoltaic layer is configured to convert energy of the incident light guided by the light collecting layer into electric energy.

In an example, the protective cover plate is made of transparent material. The light collecting layer is provided on an outer surface of the protective cover plate. The photovoltaic layer is provided on an inner surface of the protective cover plate.

In an example, the protective cover plate is made of transparent material or opaque material. The photovoltaic layer is provided on the outer surface of the protective cover plate. The light collecting layer is provided on the photovoltaic layer.

In an example, the protective cover plate comprises a first board layer and a second board layer, the first board layer being made of transparent material and being an outside board layer of the protective cover plate.

The light collecting layer and the photovoltaic layer are provided between the first board layer and the second board layer. The light collecting layer is provided on a side near to the first board layer. The photovoltaic layer is provided on a side near to the second board layer.

For example, the second board layer is made of transparent material or opaque material.

In an example, the protective cover plate further comprises a planarization layer, the planarization layer being provided between the light collecting layer and the outer surface of the protective cover plate.

In an example, the planarization layer is provided between the light collecting layer and the photovoltaic layer.

In an example, the light collecting layer has a plurality of microstructures. The microstructures have a cross-section shape of trapezoid, semicircle or triangle.

In an example, the light collecting layer is made of plastic or glass.

In an example, the protective device of mobile equipment further comprises an integrated circuit and a charging component.

The integrated circuit is connected with the photovoltaic layer and the charging component, respectively.

The integrated circuit is configured to rectify and regulate the electric energy produced by the photovoltaic layer, and provide it to the charging component.

The charging component is configured to be connected with the mobile equipment to supply power to or charge the mobile equipment.

The planarization layer is made of transparent material.

### BRIEF DESCRIPTION OF THE DRAWINGS

Embodiments of the present disclosure will be described in detail hereinafter in conjunction with accompanying drawings to allow one of ordinary skill in the art to understand the present disclosure more clearly, in which:
Figure 1 is a schematic structural view of a protective device of mobile equipment provided by an embodiment of the present disclosure;
Figure 2 is a schematic position relationship view of the light collecting layer and the photovoltaic layer provided by an embodiment of the present disclosure;
Figure 3 is a cross-section view of a first protective cover plate provided by an embodiment of the present disclosure;
Figure 4 is a cross-section view of a second protective cover plate provided by an embodiment of the present disclosure;
Figure 5 is a cross-section view of a third protective cover plate provided by an embodiment of the present disclosure;
Figure 6 is a cross-section view of a fourth protective cover plate provided by an embodiment of the present disclosure;
Figure 7 is a schematic structural view of another protective device of mobile equipment provided by an embodiment of the present disclosure;
Figure 8 is a schematic functional diagram of the protective device of mobile equipment supplying power to the mobile equipment provided by an embodiment of the present disclosure.

### DETAILED DESCRIPTION

The technical solutions of the embodiments will be described in a clearly and fully understandable way in connection with the drawings related to the embodiments of the disclosure. Apparently, the described embodiments are just a part but not all of the embodiments of the disclosure. Based on the described embodiments herein, those skilled in the art can obtain other embodiment(s), without any inventive work, which should be within the scope of the disclosure.

Unless otherwise defined, all the technical and scientific terms used herein have the same meanings as commonly understood by an ordinary skill in the art to which the present disclosure belongs. The terms, such as "first," "second" or the like, which are used in the description and the claims of the present application, are not intended to indicate any sequence, amount or importance, but for distinguishing various components. Also, the terms, such as "a/an," "one," or the like, are not intended to limit the amount, but for indicating the existence of at lease one. The terms, such as "connect/connecting/connected," "couple/coupling/coupled" or the like, are not intended to define a physical connection or mechanical connection, but may include an electrical connection/coupling, directly or indirectly. The terms, such as "On," "under," or the like, are only used to indicate relative position relationship, and when the position of the object which is described is changed, the relative position relationship may be changed accordingly.

The inventors notice that mobile equipment protective case usually comprises a protective case body. The protective case body can be disposed closely in the housing and/or display screen of the mobile equipment to prevent the housing and/or display screen of the mobile equipment from being scratched by hard objects. Furthermore, since the storage battery power of the mobile equipment is limited, which is insufficient to meet the requirement of users being outdoor or travel for a long time. A solar charging device is disposed in the mobile equipment protective case body to charge or continuously supply power to the mobile equipment, so as to increase the standby time and usage time of the mobile equipment. However, the photovoltaic plate currently used in the solar charging device of the mobile equipment protective case has low received energy per unit area, and has low utilization efficiency of incident light, and it cannot meet the requirement of supplying power to the mobile equipment.

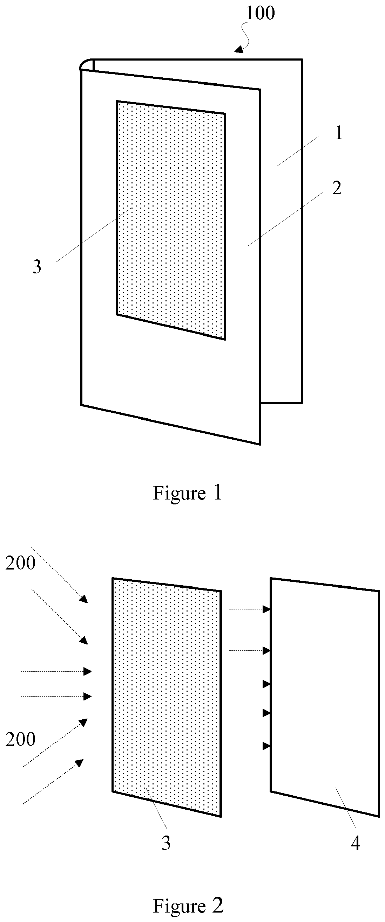

As shown in Figure 1, an embodiment of the present disclosure provides a protective device 100 of mobile equipment. The protective device 100 of mobile equipment comprises a bottom plate 1 and a protective cover plate 2. The protective cover plate 2 is connected with and opposite to the bottom plate 1, the protective cover plate 2 is provided with a light collecting film 3. As shown in Figure 2 in conjunction with Figure 1, the protective cover plate 2 is further provided with a photovoltaic film layer 4. Incident light 200 irradiates on the light collecting film layer 3 and is refracted by the light collecting layer 3 and guided to the photovoltaic layer 4. The photovoltaic layer 4 converts energy of the incident light 200 guided by the light collecting layer 3 into electric energy.

In the embodiment of the present disclosure, by disposing the light collecting layer 3 on the protective cover plate 2 of the protective device 100 of mobile equipment, the light collecting layer 3 refracts the incident light 200 and guides the incident light 200 to the photovoltaic layer 4, to improve utilization rate of the incident light 200.

For example, the light collecting layer 3 and the solar photovoltaic layer 4 can be arranged on a part region of the protective cover plate 2, or all region of the protective cover plate 2, or the body of whole protective device 100 of mobile equipment. According to different material of the protective cover plate 2, the light collecting layer 3 and the solar photovoltaic layer 4 can be arranged on the protective cover plate 2 in different manners.

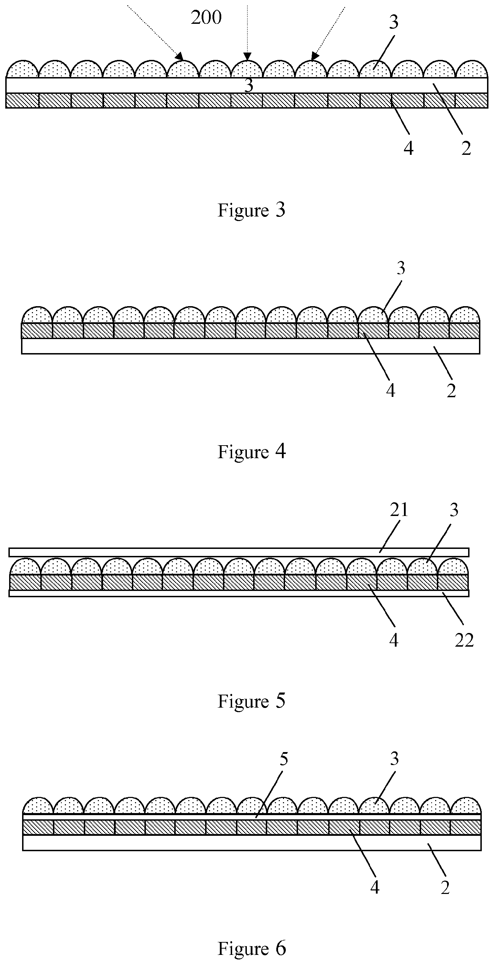

For example, as shown in Figure 3 in conjunction with Figure 2, the protective cover plate 2 is made of transparent material, the light collecting layer 3 is arranged on an outer surface of the protective cover plate 2, and the solar photovoltaic layer 4 is arranged on an inner surface of the protective cover plate 2. The protective cover plate 2 is made of transparent material, so that the light 200 incident on the light collecting layer 3 can transmit through the protective cover plate 2 to reach the solar photovoltaic layer 4. For example again, as shown in Figure 4 in conjunction with Figure 2, the protective cover plate 2 is made of transparent material or opaque material, the solar photovoltaic layer 4 is arranged on the outer surface of the protective cover plate 2, and the light collecting layer 3 is arranged on the solar photovoltaic layer 4. The light incident on the light collecting layer 3 can transmit through the light collecting layer 3 and directly reach the solar photovoltaic layer 4. Therefore, it does not matter whether the protective cover plate 2 is transparent or not. That is, the protective cover plate 2 can be made of transparent material, or can be made of opaque material.

For example, as shown in Figure 5, the protective cover plate 2 comprises a first board layer 21 and a second board layer 22. The first board layer 21 is made of transparent material and acts as an outside board layer of the protective cover plate 2. The light collecting layer 3 and the solar photovoltaic layer 4 are arranged between the first board layer 21 and the second board layer 22. The light collecting layer 3 is arranged on a side near to the first board layer 21. The solar photovoltaic layer 4 is arranged on a side near to the second board layer 22. In the present embodiment, the first board layer 21 of the protective cover plate 2 is made of transparent material, and the incident light can transmit through the first board layer 21 and reach the light collecting layer 3, then be refracted by the light collecting layer 3 to reach the solar photovoltaic layer 4. The second board layer 22 of the protective cover plate 2 can be made of transparent material, or opaque material.

In the cross-section views of the protective cover plate 2 shown in the Figures 3-5, a planarization layer is formed before the light collecting layer 3 is formed, so as to planarize the formed light collecting layer 3. For example, as shown in Figure 6, the protective cover plate 2 shown in Figure 4 further comprises a planarization layer 5. The planarization layer 5 is formed between the light collecting layer 3 and the solar photovoltaic layer 4. Similarly, the protective cover plate 2 shown in Figure 5 can also comprise the planarization layer. The planarization layer is formed between the light collecting layer 3 and the solar photovoltaic layer 4. The protective cover plate 2 shown in Figure 3 can also comprise the planarization layer 5. The planarization layer 5 is formed between the light collecting layer 3 and an outer surface of the protective cover plate 2 (not shown). The planarization layer 5 is provided so that the formed light collecting layer 3 is flat. For example, the planarization layer 5 is made of transparent material. For example, the light collecting layer 3 has a plurality of microstructures. The microstructures have cross-section shapes of trapezoid, semicircle, triangle or the like. The microstructures are, for example, bumps or protrusion with respect to the surface of the light collecting layer 3, but the present disclosure is not limited thereto. The light incident on the light collecting layer 3 is refracted so that the direction of the incident light is adjusted and the incident light finally reaches the solar photovoltaic layer 4. For example, the light collecting layer is made of plastic or glass.

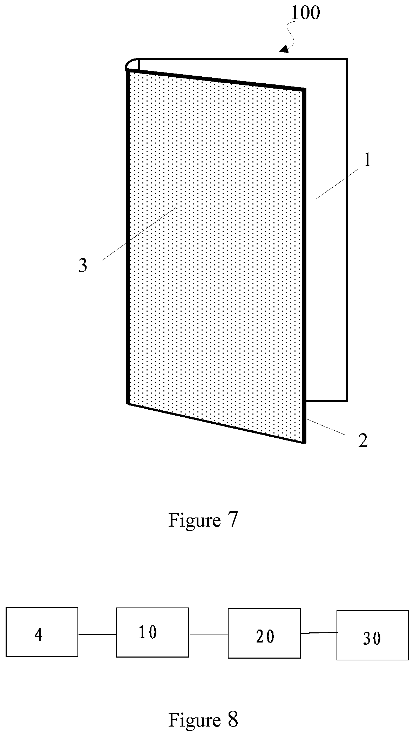

For utilizing the electrical energy output by the solar photovoltaic layer 4, the protective device of mobile equipment of the embodiment of the present disclosure further comprises an integrated circuit 10 and a charging component 20. As shown in Figure 8, the integrated circuit 10 is connected with the solar photovoltaic layer 4 and the charging component 20, respectively. The integrated circuit 10 is configured to rectify and regulate the electric energy produced by the solar photovoltaic layer 4, and provide it to the charging component 20. The charging component 20 is configured to be connected with the mobile equipment 30 for supplying power to or charging the mobile equipment 30.

For example, the solar photovoltaic layer 4 can directly be attached on the protective cover plate 2, or the solar photovoltaic layer 4 can also be formed on the protective cover plate 2 by using a plasma enhanced chemical vapor deposition (PECVD) process or printing method. Furthermore, the light collecting layer 3 of the present embodiment can occupy a part region of the protective cover plate 2, as shown in Figure 1. The light collecting layer 3 can also occupy the whole area of the protective cover plate 2 of the protective device 100 of mobile equipment, as shown in Figure 7. The solar photovoltaic layer 4 preferably has same shape and area with the light collecting layer 3 so as to convert optical energy into electoral energy in maximum efficiency.

It should be noted that the protective cover plate 2 can be a part of the housing of the protective device of mobile equipment, and is made of same material as the housing of the protective device of mobile equipment; or can be a separate plate body that is formed with material different from that of the housing of the protective device of mobile equipment, and the plate body is embedded in or attached to the housing of the protective device of mobile equipment.

The light collecting layer is provided on the protective cover plate of the protective device of mobile equipment to guide the incident light to the solar photovoltaic layer, so that the utilization efficiency of the incident light is improved, and the capability of the protective device of mobile equipment with solar charging function supplying power to the mobile equipment and continuously charging the mobile equipment is enhanced.

The described above are only illustrative embodiments and implementations for explaining the present disclosure, and the present disclosure is not intended to limited thereto. For one of ordinary skill in the art, various modifications and improvements may be made without departing from the spirit and scope of embodiments of the present disclosure, and all of which should fall within the protection scope of the present disclosure. The scope protected by the present disclosure is defined by the claims.

The present application claims priority of Chinese patent application No. 201410443494.0 filed on September 2, 2014 titled "PROTECTIVE DEVICE OF MOBILE EQUIPMENT", the entire contents of which are incorporated herein for reference.

## Claims

1. A protective device of mobile equipment, comprising a bottom plate and a protective cover plate, wherein the protective cover plate is connected with and opposite to the bottom plate,
wherein the protective cover plate is provided with a light collecting layer and a photovoltaic layer;
the light collecting layer is configured to refract incident light and guide the incident light into the photovoltaic layer; and
the photovoltaic layer is configured to convert energy of the incident light guided by the light collecting layer into electric energy.

2. The protective device of mobile equipment according to claim 1, wherein the protective cover plate is made of transparent material, the light collecting layer is provided on an outer surface of the protective cover plate, and the photovoltaic layer is provided on an inner surface of the protective cover plate.

3. The protective device of mobile equipment according to claim 1, wherein the photovoltaic layer is provided on an outer surface of the protective cover plate, and the light collecting layer is provided on the photovoltaic layer.

4. The protective device of mobile equipment according to claim 1, wherein the protective cover plate comprises a first board layer and a second board layer, the first board layer is made of transparent material and acts as an outside board layer of the protective cover plate; and
the light collecting layer and the photovoltaic layer are provided between the first board layer and the second board layer, the light collecting layer is arranged on a side near to the first board layer, and the photovoltaic layer is provided on a side near to the second board layer.

5. The protective device of mobile equipment according to claim 4, wherein the second board layer of the protective cover plate is made of transparent material or opaque material.

6. The protective device of mobile equipment according to claim 2, further comprising a planarization layer, wherein the planarization layer is provided between the light collecting layer and the outer surface of the protective cover plate.

7. The protective device of mobile equipment according to claim 3 or 4, further comprising a planarization layer, the planarization layer is provided between the light collecting layer and the photovoltaic layer.

8. The protective device of mobile equipment according to any one of claims 1-7, wherein the light collecting layer has a plurality of microstructures, the microstructures having cross-section shapes of trapezoid, semicircle or triangle.

9. The protective device of mobile equipment according to any one of claims 1-8, wherein the light collecting layer is made of transparent plastic or glass.

10. The protective device of mobile equipment according to any one of claims 1-9, further comprising an integrated circuit and a charging component;
wherein the integrated circuit is connected with the photovoltaic layer and the charging component, respectively;
the integrated circuit is configured to rectify and regulate the electric energy produced by the photovoltaic layer, and provide the rectified and regulated electric energy to the charging component; and
the charging component is configured to be connected with the mobile equipment for supplying power to or charging the mobile equipment.

11. The protective device of mobile equipment according to claim 6 or 7, wherein the planarization layer is made of transparent material.
